# EUROPÄISCHE PATENTSCHRIFT

(11) **EP 1 776 728 B1**
(45) Veröffentlichungstag und Bekanntmachung des Hinweises auf die Patenterteilung: **18.02.2009**
(21) Anmeldenummer: 05762853.9
(22) Anmeldetag: 01.07.2005
(51) Int. Cl.: H01M 4/86, H01M 8/24, H01M 8/02

(54) **BRENNSTOFFZELLEN-SYSTEM**
FUEL CELL SYSTEM
SYSTEME DE PILE A COMBUSTIBLE

(30) Priorität: 12.08.2004 DE 102004039308; 06.10.2004 DE 102004048526
(43) Veröffentlichungstag der Anmeldung: 25.04.2007
(73) Patentinhaber: Bayerische Motoren Werke Aktiengesellschaft, 80809 München (DE)
(72) Erfinder: SCHLERF, Günter, 82166 Gräfelfing (DE)
(86) Internationale Anmeldenummer: PCT/EP2005/007114
(87) Internationale Veröffentlichungsnummer: WO 2006/018068

(56) Entgegenhaltungen:
- EP-A- 1 258 936
- DE-U1- 29 611 057
- FR-A- 1 585 403
- US-A- 3 520 730
- US-A1- 2002 197 520

## Beschreibung

Die Erfindung betrifft ein Brennstoffzellen-System mit mehreren elektrisch in Reihe geschalteten Brennstoff-Einzelzellen, die jeweils eine zwischen einem elektrisch leitenden Trägerelement und einem elektrisch leitenden Deckelement angeordnete Kathoden-Elektrolyt-Anoden-Einheit aufweisen, deren dem Trägerelement zugewandte Seite mit einem ersten Gas und deren dem Deckelement zugewandte Seite mit einem zweiten Gas beaufschlagt wird, wobei die elektrisch in Reihe geschalteten Einzelzellen im wesentlichen nebeneinander angeordnet sind so dass sich deren voneinander beabstandete Kathoden-Elektrolyt-Anoden-Einheiten in einer senkrechten Projektion auf dieselben im wesentlichen nicht überdecken, und wobei bei Betrachtung zweier direkt benachbarter Einzelzellen das Deckelement der ersten Einzelzelle mit dem Trägerelement der zweiten Einzelzelle elektrisch leitend verbunden ist. Zum bekannten Stand der Technik wird neben der EP 1 258 936 A2 auf die FR-A-1 585 403 verwiesen.

Brennstoffzellen sind bekanntlich elektrochemische Energiewandler, die chemische Energie direkt in elektrischen Strom umwandeln, wobei unterschiedliche Systeme bekannt sind, so bspw. neben einer PEM-Brennstoffzelle (= Polymer-Elektrolyt-Membran-Brennstoffzelle) auch eine oxidkeramische Brennstoffzelle (= SOFC = solid oxid fuel cell). Bei einer SOFC wird einer oder bevorzugt mehreren Brennstoff-Einzelzellen kontinuierlich Brennstoff auf einer Anodenseite und Sauerstoff bzw. Luft auf einer Kathodenseite zugeführt. Das Funktionsprinzip ist generell durch die räumliche Trennung der Reaktionspartner durch einen Elektrolyten gekennzeichnet, welcher zwar für Ionen oder Protonen leitfähig ist, nicht aber für Elektronen. Entsprechende Oxidationsreaktion laufen dadurch an örtlich unterschiedlichen Stellen ab, nämlich an der Anode einerseits und an der Kathode andererseits, wobei der so verursachte Elektronenaustausch zwischen den Reaktanden über einen äußeren Stromkreis erfolgt. Insofern ist die Brennstoffzelle Teil eines Stromkreises.

Eine Brennstoffzelle besteht in Abhängigkeit von der erwünschten Leistung und Spannung aus mehreren parallel oder seriell verschalteten Einzelzellen, die jeweils aus einer Kathoden-Elektrolyt-Anoden-Einheit (= CEA) bestehen. Mittels elektrisch leitfähiger End- oder Zwischenplatten (sog. Bipolar-Platten) sind die Einzelzellen üblicherweise miteinander verbunden und zu einem Stapel (sog. Stack) zusammengefasst. Bei üblichen Konzepten von Brennstoffzellen-Stacks können die gasförmigen Reaktanden bspw. über in die Bipolar-Platten eingefräste Rillen auf den Elektrodenoberflächen der Reaktionsschichten verteilt werden. In der vorliegenden Anmeldung, die sich zwar - wie aus den weiteren Erläuterungen hervorgeht - vorrangig mit einer SOFC, d.h. mit einem oxidkeramischen Brennstoffzellensystem befasst, die jedoch ausdrücklich nicht auf eine SOFC beschränkt ist, sondern einfach auch auf andere Brennstoffzellensysteme übertragbar ist, wird anstelle der genannten Bipolarplatten von Trägerelementen und Deckelementen gesprochen, zwischen denen jeweils eine Kathoden-Elektrolyt-Einheit angeordnet ist. Bevorzugt (jedoch nicht zwangsweise) wird dabei die Kathoden-Elektrolyt-Anoden-Einheit einer Brennstoff-Einzelzelle vom sog. Trägerelement getragen, d.h. ist auf irgendeine Weise auf dieses geeignet derart aufgebracht, dass der genannte Ionenaustausch stets und alleinig über die Elektrolytschicht erfolgen kann, während das sog. Deckelement die elektrische Verbindung zwischen dieser Brennstoff-Einzelzelle und der nächsten (benachbarten) Brennstoff-Einzelzelle herstellt.

Eine SOFC hat eine relativ hohe Arbeitstemperatur in der Größenordnung von 650°C bis 1000°C und muss zur Erzielung eines guten Wirkungsgrades zunächst auf dieses Temperaturniveau gebracht werden. Ein bevorzugtes bzw. interessantes Einsatzgebiet für eine SOFC liegt in der Kraftfahrzeugtechnik als Erzeuger von elektrischem Strom für das Bordnetz bzw. für elektrische Verbraucher im Kraftfahrzeug, welches seinerseits (in üblicher Weise) von einer Brennkraftmaschine angetrieben sein kann. Bspw. aus der DE 199 13 795 C1 ist es bekannt, dass in einem solchen Fall die Abgase der Brennkraftmaschine zur Erwärmung des Brennstoffzellensystems herangezogen werden können.

Ein effizienter Wärmeübertrag von den Abgasen der Brennkraftmaschine zu einem üblichen Brennstoffzellen-Stack ist jedoch relativ aufwändig. Für einen solchen Anwendungsfall könnte eine Bennstoffzellen-Gestaltung nach dem Oberbegriff des Anspruchs 1 günstiger sein, jedoch sind auch an einem solchen bekannten Brennstoffzellen-System nach dem Oberbegriff des Anspruchs 1 Verbesserungen möglich, von denen zumindest eine wesentliche im kennzeichnenden Teil des Anspruchs 1 angegeben ist (= Aufgabe der vorliegenden Erfindung und Lösung der Aufgabe). Vorteilhafte Weiterbildungen sind Inhalt der Unteransprüche.

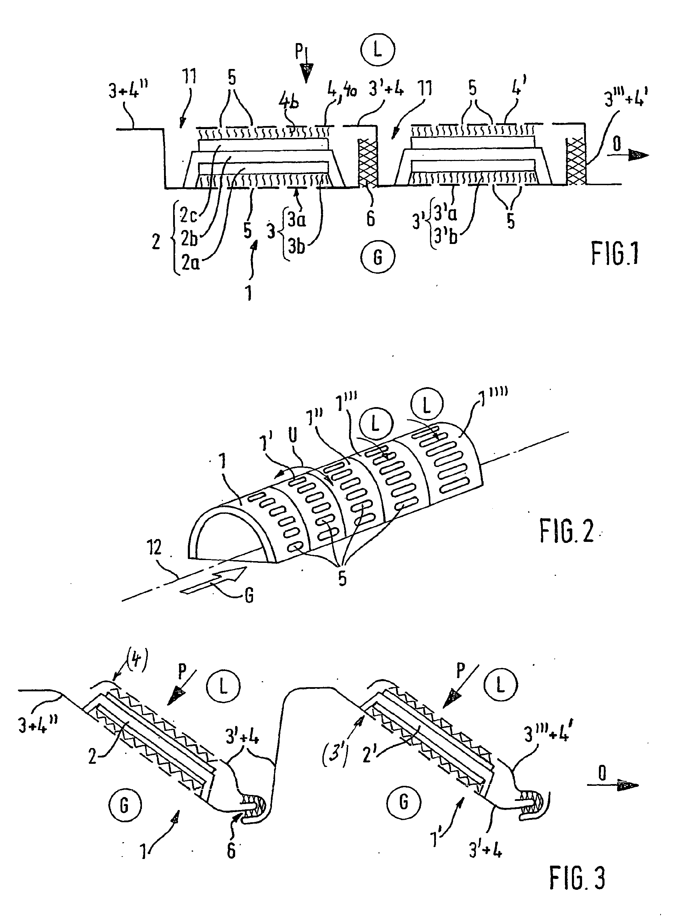

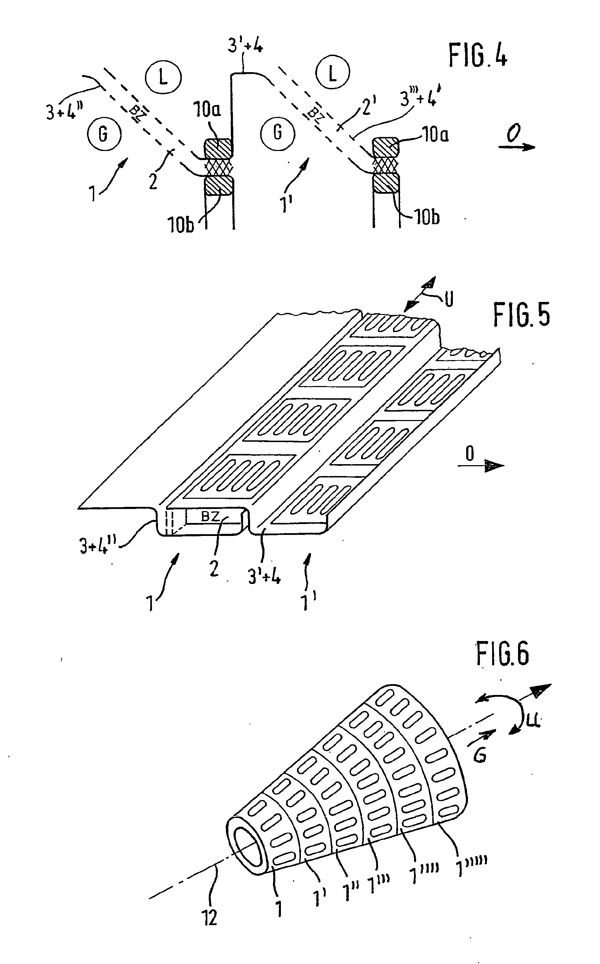

Erfindungsgemäß nehmen die Flächen bzw. die Oberflächen der Kathoden-Elektrolyt-Anoden-Einheiten aufeinander folgender Einzelzellen in Strömungsrichtung insbesondere des Brenngasstromes betrachtet zu. Mit dieser Maßnahme kann die in besagter Strömungsrichtung abnehmende Konzentration des Brenngasstromes kompensiert werden. Die in Strömungsrichtung "weiter hinten" liegenden Einzelzellen besitzen im Hinblick auf die abnehmende Konzentration des Brenngasstromes somit eine größere Reaktionsfläche. Bevor dies anhand bevorzugter, lediglich prinzipiell in den beigefügten Figuren 2 und 5 dargestellter Ausführungsbeispiele erläutert wird, seien zunächst weitere Hinweise auf eine vorteilhafte Gestaltung eines erfindungsgemäßen Brennstoffzellen-Systems gegeben.

So sind die (flächigen) Brennstoff-Einzelzellen, deren flächige Gestalt durch die Fläche der Kathoden-Elektrolyt-Anoden-Einheit gegeben ist, im wesentlichen nebeneinander angeordnet, wodurch jedoch nicht ausgeschlossen sein soll, dass zusätzlich eine Anordnung "übereinander" erfolgen kann, wie an späterer Stelle noch weiter ausgeführt wird. Dass die Einzelzellen jedoch im wesentlichen nebeneinander angeordnet sind, findet auch darin Ausdruck, dass sich die Kathoden-Elektrolyt-Einheiten in einer senkrechten Projektion auf dieselben im wesentlichen nicht überdecken, wobei durchaus eine Verschachtelung der Brennstoff-Einzelzellen ähnlich der Anordnung von Dachziegeln realisiert sein kann. Dabei kann die Anordnung so getroffen sein, dass die Kathoden-Elektrolyt-Einheiten der einander benachbarten Einzelzellen im wesentlichen eine gemeinsame Fläche beschreiben, es ist aber auch möglich, die nebeneinander angeordneten Einzelzellen gegenüber einer Längsorientierung, die sich aus diesen nebeneinander angeordneten Einzelzellen ergibt, jeweils für sich um einen gewissen Winkel, der jedoch einen Betrag von circa 45° nicht überschreiten sollte, geneigt anzuordnen. Da - wie weiterhin angegeben - bezüglich zweier einander direkt benachbarter Brennstoff-Einzelzellen das Trägerelement der ersten Einzelzelle mit dem Deckelement der zweiten Einzelzelle elektrisch leitend verbunden ist, ergibt sich in diesem Fall die Reihe von nebeneinander angeordneten Einzellzellen annähernd in Form einer Zick-Zack-Linie, während bei Anordnung sämtlicher Kathoden-Elektrolyt-Anoden-Einheiten in einer Ebene die elektrische Verbindung zwischen den Einzelzellen annähernd bzw. im wesentlichen in der gleichen Fläche wie die Einzelzellen selbst bzw. wie deren Kathoden-Elektrolyt-Anoden-Einheiten liegt.

Eine solche Anordnung der Einzelzellen im wesentlichen nebeneinander vergrößert naturgemäß die "freie" Oberfläche des Brennstoffzellen-Systems, so dass insbesondere ein Wärmeübertrag zum Aufwärmen des Systems einfacher und effizienter als im Falle eines Brennstoffzellen-Stapels erfolgen kann. Vorteilhafterweise ist auch eine (ggf. erforderliche) Kühlung bzw. Konstant-Temperierung des Systems mit einer größeren System-Oberfläche einfacher umsetzbar.

Neben diesem Vorteil eines solchen Brennstoffzellen-Systems zeichnet sich ein solches auch noch durch weitere Vorteile aus, die unabhängig von der hier formulierten Aufgabe sind und somit eine entsprechende andere Aufgabe lösen können. So kann bei einer im wesentlichen flächigen Anordnung von Brennstoff-Einzelzellen der jeweilige zu den Kathoden-Elektrolyt-Anoden-Einheiten geführte Gasstrom, bei dem es sich um Luft oder Sauerstoff bzw. um ein geeignetes Brenngas (bspw. Wasserstoff) handeln kann, besser und insbesondere strömungsgünstiger über den Kathoden-Elektrolyt-Anoden-Einheiten bzw. über dem jeweiligen Trägerelement bzw. Deckelement verteilt werden. Während bei üblichen Brennstoffzellen-Stacks hierfür aufwändige sog. "Manifolds", d.h. Gas-Verteiler benötigt werden, genügt bei einem erfindungsgemäßen Brennstoffzellen-System mit im wesentlichen in einer Fläche angeordneten Einzelzellen eine bspw. parallel zu den Trägerelementen bzw. Deckelementen verlaufende Begrenzungswand, die dann den jeweiligen Gasstrom zwischen sich und den Trägerelementen bzw. Deckelementen der nebeneinander angeordneten Einzelzellen führt. Selbstverständlich können in dieser Begrenzungswand geeignete Strömungs-Leiteinrichtungen vorhanden sein, jedoch sind hier die Dichtheitsanforderungen deutlich geringer als bei den "Manifolds" der bekannten Brennstoffzellen-Stacks.

Während nämlich bei einem Brennstoffzellen-Stack in Verbindung mit den genannten Manifolds an den jeweiligen Einzelzellen absolut sichere Abdichtungen zwischen den beiden unterschiedlichen Gasströmen (Brenngas und Luftsauerstoff) erforderlich sind, da diese selbstverständlich nicht direkt miteinander in Kontakt kommen dürfen, können bei einer hier beschriebenen Anordnung der Einzelzellen nebeneinander diese Einzelzellen selbst bzw. deren Verbindung untereinander als Abdichtung fungieren, so dass weiter aufwändige Dichtmaßnahmen, unter anderem auch in Verbindung mit der Verteilung der an die Kathoden-Elektrolyt-Anoden-Einheiten herangeführten Gase, nicht erforderlich sind. In diesem Sinne können die nebeneinander angeordneten Einzelzellen gasdicht miteinander verbunden sein. Ein weiterer Vorteil eines solchen Brennstoffzellen-Systems besteht somit neben der bereits genannten Verbesserung hinsichtlich der Strömungsführung der an den Kathoden-Elektrolyt-Anoden-Einheiten reagierenden Gase in einem diesbezüglich grundsätzlich vereinfachten Aufbau. Die Zahl der erforderlichen Abdichtungen zwischen den Einzelzellen insbesondere bezüglich der jeweiligen Gasführungen kann auf ein Minimum reduziert sein.

Neben der funktional bereits vorhandenen elektrisch leitenden Verbindung über das Deckelement einer ersten Einzelzelle mit einem Trägerelement einer benachbarten zweiten Einzelzelle kann also zusätzlich eine gasdichte Verbindung zwischen dem Trägerelement der ersten Einzelzelle und dem Trägerelement der zweiten benachbarten Einzelzelle vorliegen, wobei diese zweite Verbindung jedoch elektrisch isolierend ausgebildet sein muss, um keinen Kurzschluss innerhalb der Brennstoffzelle zu erzeugen. Handelt es sich bei dieser zweiten, gasdichten Verbindung gleichzeitig um eine mechanische Verbindung, so wird dem Brennstoffzellen-System hierdurch zusätzlich die erforderliche eine Stabilität verliehen. Ein weiterer Vorteil eines solchen Brennstoffzellen-Systems ist die hiermit erzielbare Freiheit in der Gestaltung bzw. Formgebung des Systems. Dieses kann somit hinsichtlich seiner Form besser an mögliche Einbauorte (bspw. in einem Kraftfahrzeug) angepasst werden, als dies bei den üblichen Brennstoffzellen-Stacks möglich ist.

Im Hinblick auf einen einfachen Aufbau eines solchen Brennstoffzellen-Systems wird weiterhin vorgeschlagen, dass das bei Betrachtung zweier benachbarter Einzelzellen mit dem Trägerelement der zweiten Einzelzelle elektrisch leitend verbundene Deckelement der ersten Einzelzelle mit dem besagten Trägerelement der zweiten Einzelzelle als einstückige Trägerelement-.Deckelement-Einheit ausgebildet ist, die in einem Längsschnitt zwischen den beiden Einzelzellen bspw. eine Stufe beschreibt bzw. allgemein einen Versatz aufweist. Die elektrische Verbindung der ohnehin als elektrische Leiter ausgebildeten Trägerelemente und Deckelemente ist so besonders einfach umgesetzt und gleichzeitig wird die Zahl der erforderlichen mechanischen Verbindungen in einem erfindungsgemäßen Brennstoffzellen-System auf diese Weise so gering als möglich gehalten. Vorteilhafterweise ist damit in diesem Übergangsbereich vom Deckelement der ersten Einzelzelle zum Deckelement der zweiten Einzelzelle keine weitere Abdichtung im Hinblick auf die beiden voneinander zu trennenden Gasströme erforderlich, wenn die weiter oben beschriebene gasdichte Verbindung zwischen dem Trägerelement der ersten Einzelzelle und dem Trägerelement der zweiten benachbarten Einzelzelle besteht. Die genannte bspw. abgestufte bzw. allgemein einen Versatz bildende Gestaltung ermöglicht es dabei, die einander benachbarten Einzelzellen bzw. deren Kathoden-Elektrolyt-Anoden-Einheiten im wesentlichen in einer "gemeinsamen" Fläche anzuordnen, wobei ausdrücklich darauf hingewiesen sei, dass es sich bei dieser gemeinsamen Fläche keineswegs um eine Ebene handeln muss; vielmehr kann auch eine gekrümmte Fläche umgesetzt sein.

So kann die gemeinsame Fläche der Kathoden-Elektrolyt-Anoden-Einheiten zumindest in einer Richtung gewölbt sein und bspw. im wesentlichen einen Zylinder oder Kegel, allgemein einen in Umfangsrichtung geschlossenen Hohlkörper, der bspw. im wesentlichen rotationssymmetrisch sein kann, beschreiben. Damit ist auf einfache und funktional wirkungsvolle Weise bspw. ein Anbau an bzw. in die Abgasanlage eines Kraftfahrzeugs möglich. Beispielsweise kann ein entsprechend gestaltetes Brennstoffzellen-System in das Gehäuse eines Abgas-Katalysators oder eines Schalldämpfers in der Fahrzeug-Abgasanlage integriert sein. Gegebenenfalls kann das Brennstoffzellen-System bzw. eine (bereits genannte) Begrenzungswand desselben selbst als ein abgasführendes Bauteil (für die Abgase der Brennkraftmaschine) ausgebildet sein. Auch hier tritt deutlich ein Vorteil eines solchen Brennstoffzellen-Systems zu Tage, nämlich dass zumindest einer der Gasströme im wesentlichen in Längsrichtung der aneinander gereihten Einzelzellen entlang der selben einfach geführt werden kann.

Insbesondere im Falle einer SOFC mit in einer gewölbten Fläche nebeneinander angeordneten Brennstoff-Einzelzellen kann es vorteilhaft sein, wenn die keramische Kathoden-Elektrolyt-Anoden-Einheit flächig partiell bzw. unterbrochen auf das Trägerelement aufgebracht ist, um keine allzu große zusammenhängende gewölbte Fläche zu schaffen, die hinsichtlich thermisch bedingter Formänderungen für die Elektroden-Keramik (der Kathode bzw. der Anode) bzw. für den Elektolyten kritisch sein könnte. Beispielsweise können die Elektroden (Kathode bzw. Anode) und der Elektrolyt hierzu mit einem thermischen Beschichtungsverfahren (Plasmaspritzen etc.; vgl. hierzu bspw. WO 02/101859) auf das Trägerelement aufgebracht sein, und zwar nicht in einer durchgehenden Schicht, sondern mit Unterbrechungen, wobei im Bereich der Elektroden-Keramik Durchbrüche im Trägerelement oder Deckelement vorgesehen sind, über die das betreffende Gas zur jeweiligen Elektroden-Oberfläche gelangen kann.

Bereits erwähnt wurde eine mechanische Verbindung zwischen zwei einander benachbarten Trägerelement-Deckelement-Einheiten, die jedoch elektrisch gegeneinander isoliert sein müssen, um einen elektrischen Kurzschluss innerhalb des Brennstoffzellensystems zu vermeiden. Dabei ist eine einfache, sichere mechanische Verbindung unter Zwischenlage einer geeigneten elektrischen Isolationsschicht bspw. in Form einer Bördelung möglich. Auch kann eine bereits genannte gasführende Begrenzungswand mit einem Trägerelement oder einem Deckelement über eine Bördelung verbunden sein, wobei auch hier zur Vermeidung von Kurzschluss eine geeignete Isolation erforderlich ist. Es kann aber auch die mechanische Verbindung zwischen zwei einander benachbarten Trägerelement-Deckelement-Einheiten und/oder zwischen einer Trägerelement-Deckelement-Einheit und einer gasführenden Begrenzungswand in Form einer teilweisen Überlappung mit Sicherung durch ein Spannband oder dgl., ggf. in Zusammenwirken mit einem Stützelement, ausgeführt sein.

Trotz der immensen Vorteile eines solchen Brennstoffzellen-Systems sei auch auf einen geringfügigen Nachteil hingewiesen, nämlich dass sich mit dieser vorgeschlagenen Anordnung relativ lange elektrische Strompfade einstellen. Bei Verwendung eines geeigneten (insbesondere im Hinblick auf das Brenngas und die hohen Temperaturen) standfesten Materials für die Trägerelement-Deckelement-Einheiten kann sich hierdurch ungünstigerweise ein relativ hoher elektrischer Widerstand im Brennstoffzellen-System ergeben. Als Abhilfemaßnahme können nun an den insbesondere dem Luft-Sauerstoff-Gasstrom zugewandten Deckelementen (oder Trägerelementen) der Kathoden-Elektrolyt-Anoden-Einheiten Maßnahmen zur Steigerung der elektrischen Leitfähigkeit vorgesehen sein. Beispielsweise kann auf diese Elemente eine geeignete gut stromleitende Schicht aufgebracht sein.

Im folgenden wird die Erfindung anhand lediglich abstrakt (und nur teilweise) dargestellter Ausführungsbeispiele noch weiter erläutert, wobei insbesondere auf die **Figuren 2** **und** **5** hinzuweisen ist, in denen das kennzeichnende Merkmal des Anspruchs 1 explizit dargestellt ist. Weitere hier vorgeschlagene Merkmale sind jedoch auch in anderen Figuren dargestellt, die das kennzeichnende Merkmal des Anspruchs 1 nicht explizit enthalten.

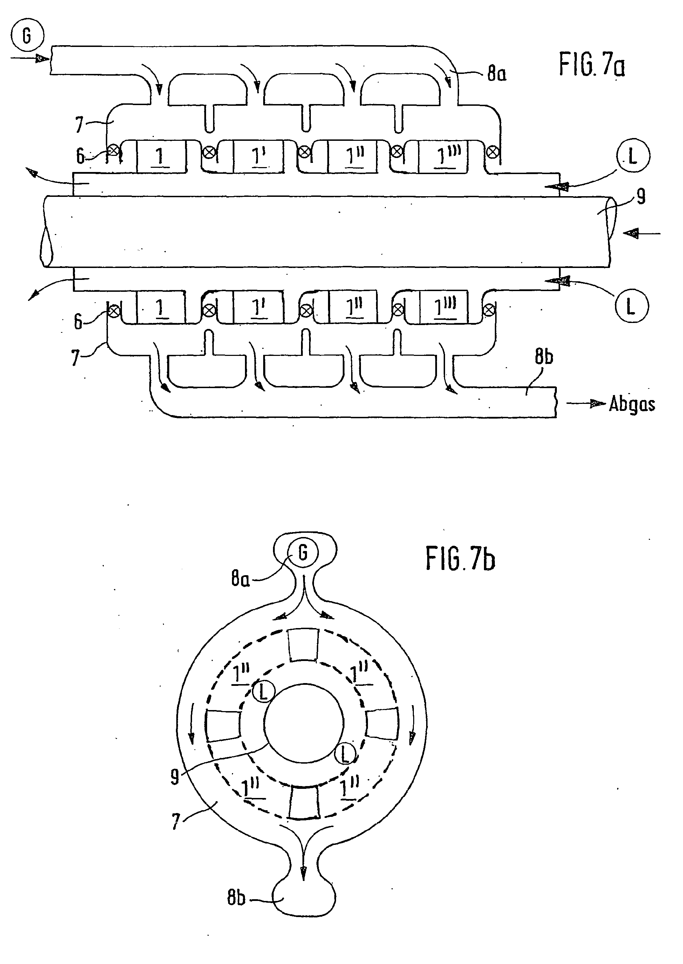

So zeigt die beigefügte **Figur 1** einen Schnitt durch zwei nebeneinander (in einer Fläche) angeordnete Brennstoff-Einzelzellen eines Brennstoffzellensystems. **Figur 2** zeigt in einer räumlichen Darstellung die obere Hälfte einer (gekrümmten) Zylinderfläche, in welcher Brennstoff-Einzelzellen hintereinander angeordnet sind. **Figur 3** zeigt ähnlich der Darstellung von Fig.1 eine abgewandelte Anordnung von Einzelzellen und **Figur 4** bei ähnlicher Anordnung bzw. bei Anordnung analog Fig.2 eine andere mechanische Verbindungstechnik. **Figur 5** verdeutlicht die bereits beim Ausführungsbeispiel nach Fig.2 vorhandene flächige Unterteilung der Kathoden-Elektrolyt-Anoden-Einheit einer Brennstoff-Einzelzelle, während in **Figur 6** eine Abwandlung zur Ausführungsform nach Fig.2 dargestellt ist. In den **Figuren 7a, 7b** schließlich ist das Brennstoffzellen-System nach Fig.2 mit gasführenden Begrenzungswänden sowie einer Gasführung zur Temperierung des Systems dargestellt, wobei Fig.7a einen Längsschnitt und Fig.7b einen Querschnitt durch das System zeigt.

Zunächst auf **Figur 1** Bezug nehmend ist mit der Bezugsziffer 2 eine Kathoden-Elektrolyt-Anoden-Einheit bezeichnet, die Bestandteil einer oxidkeramischen Brennstoff-Einzelzelle 1 ist. Diese Kathoden-Elektrolyt-Anoden-Einheit 2 ist auf einem Trägerelement 3 aufgebracht, welches hier aus einem metallischem Grundblech 3a mit darauf liegendem metallischem Gewirk 3b besteht, auf das die erste keramische Elektrodenschicht 2a der Kathoden-Elektrolyt-Anoden-Einheit 2, nämlich die Anode 2a, mittels Plasmaspritzen oder dgl. aufgebracht ist. Auf diese Anode 2a ist dann eine Elektrolytschicht 2b und auf diese die zweite keramische Elektrodenschicht 2c, nämlich die Kathode 2c aufgebracht, so wie dies beispielsweise in der bereits genannten WO 02/101859 beschrieben ist, wobei die Elektrolytschicht 2b die Anode 2a und das Gewirk 3b zum Grundblech 3a hin gasdicht umhüllt.

An die Kathode 2c, d.h. an die dem Trägerelement 3 abgewandte Seite der Kathoden-Elektrolyt-Anoden-Einheit 2 schließt sich ein Deckelement 4 an, welches hier ebenfalls aus einem Grundblech 4a sowie einem hiervon getragenen Gewirk 4b besteht. In diesem Deckelement 4 bzw. im Grundblech 4a desselben sind ebenso wie im Grundblech 3a des Trägerelementes 3 mehrere Durchbrüche 5 vorgesehen, durch die jeweils ein Gas zur Oberfläche der Anode 2a bzw. der Kathode 2c gelangen kann. Selbstverständlich kann jeweils auch nur ein einziger Durchbruch 5 vorgesehen sein, in den dann bspw. das genannte Gewirk 3b oder 4b bspw. eingesetzt ist.

Ein erster Gasstrom G in Form eines Brenngases (bevorzugt Wasserstoff) wird an die Anode 2a herangeführt, d.h. entweder senkrecht oder parallel zur Zeichenebene an der der Kathoden-Elektrolyt-Anoden-Einheit 2 abgewandten Seite des Trägerelements 3 vorbeigeführt. Ein zweiter Gasstrom L in Form von zumindest anteilig Sauerstoff (bevorzugt Luft) wird an die Kathode 2c herangeführt, d.h. entweder senkrecht oder parallel zur Zeichenebene an der der Kathoden-Elektrolyt-Anoden-Einheit 2 abgewandten Seite des Deckelements 4 vorbeigeführt. Selbstverständlich können die Seiten, an denen Luft-Sauerstoff L bzw. Brenngas G an die Kathoden-Elektrolyt-Anoden-Einheit 2 herangeführt werden, auch vertauscht werden; dann wird eben die Kathode zur Anode und umgekehrt.

Wie nun aus Figur 1 hervorgeht, sind zumindest zwei, tatsächlich jedoch beispielsweise zwanzig derartige Brennstoff-Einzelzellen 1, 1' (usw.) mit ihren Kathoden-Elektrolyt-Anoden-Einheiten 2 nebeneinander angeordnet, und zwar hier derart, dass deren voneinander beabstandete Kathoden-Elektrolyt-Anoden-Einheiten 2 im wesentlichen eine gemeinsame Fläche beschreiben, wobei bei Betrachtung zweier benachbarter Einzelzellen 1, 1' das Deckelement 4 der ersten Einzelzelle 1 mit dem Trägerelement 3' der zweiten Einzelzelle 1' elektrisch leitend verbunden ist. Konkret ist die Ausgestaltung derart, dass bei Betrachtung zweier benachbarter Einzelzellen 1, 1' das Trägerelement 3' der zweiten Einzelzelle 1' (bzw. dessen Grundblech 3'a) mit dem Deckelement 4 der ersten Einzelzelle 1 (bzw. mit dessen Grundblech 4a) als einstückige Trägerelement-Deckelement-Einheit ausgebildet ist, für die im weiteren die zusammengesetzte Kennzeichnung 3'+4 verwendet wird. Obwohl hier nur die jeweiligen sog. Grundbleche 3'a bzw. 4a miteinander verbunden sind bzw. eine Einheit bilden, wird also von einer Trägerelement-Deckelement-Einheit 3'+4 gesprochen, da die hier gezeigte Ausbildung jeweils mit einem Grundblech 3'a bzw. 4a und einem darauf angeordneten Gewirk 3'b, 4b lediglich fakultativ ist. Die Tatsache, dass bei der hier dargestellten Ausführungsform sowohl die jeweiligen Trägerelemente (3) als auch die jeweiligen Deckelemente (4) jeweils aus einem Grundblech (3a bzw. 4a) und einem darauf aufgebrachten metallischen Gewirk (3b bzw. 4b) bestehen, ist also ohne Auswirkung auf den vor der Figurenbeschreibung erläuterten Vorteil einer einstückigen Trägerelement-Deckelement-Einheit 3'+4, die durch ein Trägerelement 3' und ein Deckelement 4 zweier benachbarter Einzelzellen 1, 1' gebildet ist. Ohne irgendeine Einschränkung kann nämlich das jeweilige Gewirk 3b bzw. 4b lediglich auf den oder die tatsächlich benötigten Abschnitt(e) der Trägerelement-Deckelement-Einheit 3'+4, nämlich auf die Abschnitte im Bereich der Kathoden-Elektrolyt-Anoden-Einheiten 2, aufgebracht oder in diese eingesetzt sein.

Um eine günstige Anordnung der Kathoden-Elektrolyt-Anoden-Einheiten 2 nebeneinander im wesentlichen in einer gemeinsamen Fläche zu ermöglichen, beschreibt die Trägerelement-Deckelement-Einheit 3'+4 beim Ausführungsbeispiel nach **Figur 1** im figürlich dargestellten Längsschnitt zwischen den beiden Einzelzellen 1, 1,' eine Stufe 11, allgemein ist an dieser Stelle jedoch ein beliebig gestalteter Versatz möglich. Grundsätzlich lässt sich die gezeigte Anordnung im übrigen auch dadurch beschreiben, dass sich die voneinander beabstandeten Kathoden-Elektrolyt-Anoden-Einheiten 2, 2' der Brennstoff-Einzelzellen 1, 1', ..... in einer senkrechten Projektion gemäß Pfeilrichtung P auf die Kathoden-Elektrolyt-Anoden-Einheiten 2, 2' im wesentlichen nicht überdecken.

Das Trägerelement 3 der ersten Einzelzelle 1 ist in linksseitiger Fortsetzung dieser Kette von im wesentlichen in einer gemeinsamen Fläche aneinander gereihten Brennstoff-Einzelzellen 1, 1' usw. zusammen mit dem Deckelement 4" einer ansonsten nicht weiter dargestellten, der Einzelzelle 1 in **Figur 1** linksseitig benachbarten Brennstoff-Einzelzelle als einstückige Trägerelement-Deckelement-Einheit 3+4" ausgebildet. In analoger Weise ist in rechtsseitiger Fortsetzung dieser Kette von im wesentlichen in einer gemeinsamen Fläche aneinander gereihten Brennstoff-Einzelzellen 1, 1' usw. das Deckelement 4' der Einzelzelle 1' zusammen mit dem Trägerelement 3"' einer ansonsten nicht weiter dargestellten, der Einzelzelle 1' in **Figur 1** rechtsseitig benachbarten Brennstoff-Einzelzelle als einstückige Trägerelement-Deckelement-Einheit 3"'+4' ausgebildet.

Jedoch liegt diese soeben genannte einstückige Ausbildung von einem Deckelement 4 (bzw. Grundblech 4a desselben) einer ersten Einzelzelle 1 und einem Trägerelement 3' einer dieser benachbarten zweiten Einzelzelle 1' (bzw. Grundblech 3'a derselben) in Form einer einstückigen Trägerelement-Deckelement-Einheit 3'+4 nur jeweils hinsichtlich einer einzigen konkreten Einzelzelle 1 vor. Keinesfalls darf das Trägerelement 3 der ersten Einzelzelle 1, das ein Bestandteil der bereits genannten einstückigen Trägerelement-Deckelement-Einheit 3+4" ist, mit der einstückigen Trägerelement-Deckelement-Einheit 3'+4, d.h. mit dem Deckelement 4 der ersten Einzelzelle 1 und dem Trägerelement 3' der zweiten Einzelzelle 1' in elektrisch leitender Verbindung stehen, da dies einen elektrischen Kurzschluss in der Einzelzelle und somit in der gesamten Brennstoffzelle zur Folge hätte.

Um jedoch eine einfache und sichere Abdichtung zwischen den beiden Gasströmen G und L (der Gasstrom G wird wie bereits erläutert wurde an der Anodenseite 2a und somit in Figur 1 unterhalb der Trägerelemente 3 geführt; der Gasstrom L wird wie bereits erläutert wurde an der Kathodenseite 2c und somit in Figur 1 oberhalb der Deckelemente 4 geführt) zu erhalten, ist das Trägerelement 3 der ersten Einzelzelle 1 mit dem Trägerelement 3' der benachbarten zweiten Einzelzelle 1' (bzw. mit der entsprechenden Trägerelement-Deckelement-Einheit 3'+4) gasdicht verbunden, und zwar im Bereich der genannten Stufe 11 oder allgemein des entsprechend gestalteten Versatzes. Hierzu ist das Trägerelement 3 der ersten Einzelzelle 1 am der benachbarten Einzelzelle 1' zugewandten Ende im wesentlichen in geeigneter Weise, hier rechtwinkelig, umgebogen. Der sog. Versatz der Trägerelement-Deckelement-Einheit 3'+4 der zweiten Einzelzelle 1' ist ebenfalls in geeigneter Weise geformt, wobei hier die entsprechenden gasdicht miteinander zu verbindenden Abschnitte parallel zueinander verlaufen. Unter Zwischenlage eines elektrischen Isolators 6 ist nun dieser freie Endabschnitt des Trägerelements 3 der ersten Einzelzelle 1 mit der Trägerelement-Deckelement-Einheit 3'+4 der benachbarten zweiten Einzelzelle 1' auf nicht näher dargestellte Weise mechanisch gasdicht verbunden und gleichzeitig elektrisch gegeneinander isoliert. Diese mechanische Verbindung unter Zwischenlage eines lediglich schematisch dargestellten Isolators 6 kann dabei in Form einer (an sich üblichen) Bördelverbindung ausgebildet sein.

Zurückkommend auf die nebeneinander liegende Anordnung von Brennstoff-Einzelzellen 1, 1' usw. zur Bildung eines Brennstoffzellen-Systems kann diese Anordnung nach **Figur 1** auch so beschrieben werden, dass hier die Kathoden-Elektrolyt-Anoden-Einheiten 2, 2' der beiden Einzelzellen 1, 1' derart angeordnet sind, dass in einem bzw. im figürlich dargestellten Längsschnitt die Anoden und die Kathoden der nebeneinander angeordneten Einzelzellen im wesentlichen ein in Pfeilrichtung 0 längsorientiertes Gebilde ergeben, jedoch sind auch andere Anordnungen möglich, wozu auf das weitere Ausführungsbeispiel nach **Figur 3** verwiesen wird.

Auch beim Ausführungsbeispiel nach **Figur 3****,** bei welchem - wie grundsätzlich in der vorliegenden Beschreibung - für gleiche Elemente wie beim zuerst erläuterten Ausführungsbeispiel die gleichen Bezugsziffern verwendet sind, sind mehrere elektrisch in Reihe geschaltete Brennstoffeinzelzellen 1, 1' im wesentlichen nebeneinander angeordnet, so dass sich deren voneinander beabstandete Kathoden-Elektrolyt-Anoden-Einheiten 2, 2, in einer senkrechten Projektion (gemäß Pfeilrichtung P) auf dieselben im wesentlichen nicht überdecken, wobei bei Betrachtung zweier benachbarter Einzelzellen 1, 1' das Trägerelement 3' der zweiten Einzelzelle 1' mit dem Deckelement 4 der ersten Einzelzelle 1 elektrisch leitend verbunden ist. Dabei sind in Fig.3 lediglich zwei einander benachbarte Einzellen 1, 1' dargestellt, tatsächlich lässt sich eine solche Kette von Einzelzellen über eine größere Stückzahl fortsetzen. Auch mit dieser Anordnung erhält man die beschriebenen Vorteile, wobei hier der Bereich der mechanischen, elektrisch isolierten Verbindung zwischen der Trägerelement-Deckelement-Einheit 3'+4 der zweiten Einzelzelle 1' mit der Trägerelement-Deckelement-Einheit 3+4' der ersten Einzelzelle 1 etwas anders als beim Ausführungsbeispiel nach Fig.1 ausgebildet ist, und wobei eine Bördelverbindung gezeigt ist. Analog dem Ausführungsbeispiel nach Fig.1 liegt jedoch auch beim Ausführungsbeispiel nach Fig. 3 eine "Längsorientierung" (mit dem Pfeil 0 verdeutlicht) vor, die es gestattet, dass ein Strom L von Luft-Sauerstoff sowie ein Strom G von Brenngas in günstiger Weise und einfach voneinander getrennt an den beiden Seiten einer Kette von aneinander gereihten Brennstoff-Einzelzellen vorbeigeführt werden kann, wobei gleichzeitig ein guter Wärmeübertrag umgesetzt werden kann.

Zurückkommend auf **Figur 1** und die dort im wesentlichen geradlinige Anordnung von ebenfalls gemäß Pfeil 0 längsorientiert ausgerichteten Brennstoff-Einzelzellen 1, 1', usw. muss hingegen ein durch eine Einzelzelle 1, 1' senkrecht zur Zeichenebene in Fig.1 gelegter Schnitt keinen geradlinigen Verlauf der Elektroden-Flächen zeigen. Vielmehr kann die Gestaltung wie in **Figur 2** dargestellt sein.

**Figur 2** zeigt in einer räumlichen Darstellung die obere Hälfte einer (gekrümmten) Zylinderfläche, in welcher Brennstoff-Einzelzellen 1, 1', 1", 1'" usw. hintereinander angeordnet sind, wobei jede Brennstoff-Einzelzelle für sich ringförmig ausgebildet ist. Von jeder Einzelzelle 1, 1', 1 ", 1 "' usw. sind dabei in dieser Darstellung nur die jeweiligen oberen Hälften der ebenfalls ringförmigen Deckelemente 4 (bzw. 4' usw.) mit den darin vorgesehenen Durchbrüchen 5 sichtbar. Durch mit dem Buchstaben L gekennzeichnete Pfeile ist ein Luftstrom dargestellt, der über diese Deckelemente 4 der nebeneinander angeordneten Einzelzellen 1, 1' usw. geführt wird, so dass Luft bzw. Sauerstoff durch die Durchbrüche 5 zu den Kathoden der Einzelzellen gelangen kann. Durch einen mit dem Buchstaben G gekennzeichneten Pfeil ist ein Brenngas-Strom dargestellt, der innerhalb des von den solchermaßen angeordneten Brennstoff-Einzellzellen gebildeten HohlZylinders geführt ist, und zwar im wesentlichen in Richtung der ZylinderLängsachse 12 desselben. Innerhalb dieses Hohlzylinders kann dabei der Brenngas-Strom G durchaus spiralförmig oder verwirbelt geführt sein, bspw. mit Hilfe geeignet gestalteter Führungselemente (nicht dargestellt). Die Innenwand dieses genannten Hohlzylinders mit der Längsachse 12 wird somit durch die in Richtung der Längsachse 12 hintereinander bzw. nebeneinander gereihten Trägerelemente 3 der Brennstoff-Einzelzellen 1, 1' 1" usw. gebildet, wobei in diesen jeweils in sich ringförmigen Trägerelementen 3 bzw. in den Grundplatten 3a derselben die bereits genannten Durchbrüche 5 (in Figur 2 nicht sichtbar bzw. nicht dargestellt) für das Brenngas G (zu den Anoden 2a hin) vorgesehen sind.

Ähnlich wie in **Figur 2** die Durchbrüche 5 (hier nur für den Luft-Sauerstoffstrom L) dargestellt sind, sind bei diesem Ausführungsbeispiel die Kathoden 2c bzw. Anoden 2a geformt, d.h. innerhalb jeder Einzelzelle 1 bzw. 1' usw. sind die Katoden-Elektrolyt-Anoden-Einheiten 2 derart flächig partiell auf das Trägerelement 3 aufgebracht, dass in Umfangsrichtung U jeder ringförmigen Einzelzelle 1, 1', .... betrachtet eine Vielzahl von aneinander gereihten Segmenten von Einzelzellen vorliegen. Dies ist der Einfachheit halber nicht detailliert dargestellt, jedoch sind die einzelnen Segmente von Einzelzellen im wesentlichen ebenso geformt und gestaltet wie die figürlich dargestellten Durchbrüche 5. In **Figur 5** ist dieses Prinzip der flächig partiellen Unterteilung einer Brennstoff-Einzelzelle in mehrere Einzelzellen-Segmente in perspektivischer Darstellung nochmals für ein "ebenes", d.h. nicht zu einem Hohlkörper geformtes Brennstoffzellen-System dargestellt, wobei die Pfeilrichtung 0 die sog. "Längsorientierung" darstellt, vgl. Fig. 1, 3, und die Pfeilrichtung U der Umfangsrichtung nach Fig.2 entspricht. In Fig. 5 erkennt man somit wie in Fig.1 zwei nebeneinander angeordnete Trägerelement-Deckelement-Einheiten 3'+4, 3+4" mit den entsprechend vorgesehenen Durchbrüchen 5 im Trägerelement 3' und im Deckelement 4. Ferner erkennt man die Kathoden-Elektrolyt-Anoden-Einheit 2 (= BZ) der Einzelzelle 1 bzw. das vorderste Segment derselben. Mit der soweit beschriebenen "Segmentierung" der Kathoden-Elektrolyt-Anoden-Einheiten 2, d.h. der flächig partiellen Aufbringung derselben auf das Trägerelement 3 können Probleme, die sich ansonsten aus Wärmespannungen ergeben könnten, vermieden werden. Diese Maßnahme dient also der Reduzierung mechanischer Spannungen innerhalb der Kathoden-Elektrolyt-Anoden-Einheiten 2.

Nunmehr zu **Figur 2** zurückkehrend erkennt man, dass im Vergleich über mehrere Brennstoff-Einzelzellen die Länge der Durchbrüche 5 in Strömungsrichtung des Brenngasstromes G betrachtet zunimmt. Wie erwähnt nimmt somit auch die Länge der Segmente der aneinander gereihten Brennstoff-Einzelzellen und somit auch die Oberfläche der Segmente sowie die wirksame Oberfläche der Einzelzellen 1, 1' usw. in Strömungsrichtung G des Brenngasstromes betrachtet zu. Mit dieser Maßnahme wird die in besagter Strömungsrichtung abnehmende Konzentration des Brenngasstromes G kompensiert. Die in Strömungsrichtung "weiter hinten" liegenden Einzelzellen besitzen im Hinblick auf die abnehmende Konzentration des Brenngasstromes G somit eine größere Reaktionsfläche.

Ein vergleichbarer Effekt ist mit einer abweichenden Gestaltung, nämlich entsprechend dem Ausführungsbeispiel nach **Figur 6** erzielbar. Hier ist das Brennstoffzellen-System nicht in Form eines Hohlzylinders wie in Fig.2, sondern in Form eines Hohlkegels mit in Strömungsrichtung des Brenngasstromes G zunehmendem Querschnitt ausgebildet. Da somit die Oberfläche des Kegels in Brenngas-Strömungsrichtung G zunimmt, nimmt somit auch die Oberfläche der aneinander gereihten Brennstoff-Einzelzellen 1, 1', 1", usw. in Strömungsrichtung G betrachtet zu, wodurch abermals eine Kompensation der in Strömungsrichtung abnehmenden Konzentration des Brenngases G möglich ist. Die zunehmende Oberfläche kann dabei dazu genutzt werden, die Zahl der Segmente der Einzelzellen in Strömungsrichtung G betrachtet - wie figürlich dargestellt - zu steigern oder in Strömungsrichtung G betrachtet die Abmessung der einzelnen Segmente in Umfangsrichtung U zu vergrößern (nicht dargestellt).

Während aus **Fig.2** hervorgeht, auf welche Weise der Brenngasstrom G entlang des Brennstoffzellen-Systems bzw. entlang der Trägerelemente 3 desselben geführt werden kann, ist dies für den zweiten Gasstrom bzw. Luft-Sauerstoffstrom L, der entlang der Deckelemente 4 geführt wird, in Figur 2 nicht dargestellt. Zwar ist theoretisch keine gezielte Führung für diesen Luftstrom L erforderlich, dennoch sollte eine solche vorhanden sein, nicht nur um gezielt einen Zustrom von frischem Sauerstoff bzw. von unverbrauchter Luft zu fördern, sondern bspw. auch um eine starke Verschmutzung des Brennstoffzellen-Systems zu vermeiden.

Die **Figuren 7a, 7b** zeigen prinzipiell eine mögliche Ausgestaltung mit einer Begrenzungswand 7 sowie einer daran angeschlossenen Gas-Zufuhranlage 8a und einer Gas-Abfuhranlage 8b, wobei die Begrenzungswand 7 hier vier nebeneinander in einer gemeinsamen kreiszylindrischen Fläche angeordnete Brennstoff-Einzelzellen 1, 1', 1", 1'" umhüllt. Den kreiszylindrischen Einzelzellen 1, 1' usw. angepasst ist die diese umhüllende und hier den Brenngas-Strom G quasi außenseitig entlang der Oberfläche der Einzelzellen führende Begrenzungswand 7 ebenfalls kreiszylindrisch ausgebildet. Im in den Figuren 7a, 7b oberen Bereich sind in der Begrenzungswand 7 den einzelnen Einzelzellen 1, 1' usw. zugeordnet Zufuhröffnungen vorgesehen, über die der von einer Gas-Zufuhranlage 8a herangeführte Brenngasstrom G in den von der Begrenzungswand 7 umschlossenen Innenraum und somit zu den Einzelzellen gelangen kann. In analoger Weise wird das verbrannte sog. Abgas aus dem in den Figuren 7a, 7b unteren Bereich über eine Gas-Abfuhranlage 8b abgeführt.

Die gasdichte und mechanische Verbindung zwischen der Begrenzungswand 7 und den jeweiligen Trägerelement-Deckelement-Einheiten kann hierbei ähnlich wie diejenige zwischen zwei einander benachbarten Trägerelement-Deckelement-Einheiten ausgebildet sein, d.h. unter Zwischenlage eines geeigneten elektrischen Isolators 6 im Verbindungsbereich, der bspw. abermals in Form einer nicht dargestellten Bördelverbindung ausgeführt sein kann. Im übrigen kann eine ähnliche Begrenzungswand auch auf der anderen Seite der Kathoden-Elektrolyt-Anoden-Einheiten 2, d.h. hier im Bereich der Zufuhr des Luft-Sauerstoff-Gasstroms L vorgesehen sein, und zwar nicht nur im Falle einer anderen baulichen Ausführung bzw. Anordnung von Einzel-Brennstoffzellen 1, 1', bei der diese zwar weiterhin eine gemeinsamen Fläche, jedoch keine geschlossene Zylinderfläche bilden. Vielmehr kann auch bei einer Anordnung der Brennstoff-Einzelzellen 1, 1' usw. auf einer Zylinderfläche oder Kegelfläche und einem damit analog Fig. 2 oder Fig.6 entstehenden Hohlzylinder oder Hohlkegel im Inneren desselben in radialer Richtung beabstandet von den Einzelzellen eine zylindrische oder kegelförmige Begrenzungswand vorgesehen sein, innerhalb bzw. entlang derer auf der den Einzelzellen gegenüberliegenden Seite ein Medium geführt wird, mit Hilfe dessen das Brennstoffzellensystem erwärmt oder gekühlt, allgemein geeignet temperiert werden kann. Eine derartige Begrenzungswand, die hier als Rohr ausgeführt ist, innerhalb dessen ein geeignetes der Temperierung dienendes Medium geführt ist, ist in den Figuren 7a, 7b mit der Bezugsziffer 9 gekennzeichnet. Zwischen dieser Begrenzungswand 9, d.h. zwischen der Außenwand dieses Rohres, und den aneinander gereihten Brennstoff-Einzelzellen 1, 1' usw. ist hier der Luft-Sauerstoff-Gasstrom L geführt.

Nunmehr auf **Figur 4** Bezug nehmend ist hierin eine vom Ausführungsbeispiel nach Fig.1 abweichende mechanische Verbindung zwischen den Trägerelement-Deckelement-Einheiten einander benachbarter Brennstoff-Einzelzellen, die wie in Fig.3 dargestellt angeordnet sind, gezeigt. Dabei sind die Träger-Deckelement-Einheiten 3'+4 sowie 3+4" im Verbindungsbereich derart geformt, dass sie sich in Richtung der Längsorientierung 0 erstrecken und überlappen. Insbesondere wenn dieses Brennstoffzellen-System weiterhin analog Fig.2 gestaltet ist, d.h. in Form eines Kreiszylinders oder allgemein eines rotationssymmetrischen Hohlkörpers mit der Längsachse 12 ausgebildet ist, kann die mechanische Verbindung zwischen zwei einander benachbarten Trägerelement-Deckelement-Einheiten (4+3', 3+4") in Form einer teilweisen Überlappung mit Sicherung durch ein Spannband 10a oder dgl., ggf. in Zusammenwirken mit einem rotationssymmetrischen Stützelement 10b ausgeführt sein. Dabei umhüllt das Spannband 10a den sog. Überlappungsbereich der Trägerelement-Deckelement-Einheiten, die sich in diesem Überlappungsbereich ihrerseits auf dem innerhalb dessen angeordneten Stützelement 10b abstützen.

Bevorzugt kann ein Brennstoffzellen-System gemäß den vorliegenden Unterlagen in Verbindung mit einer Brennkraftmaschine, die als Antriebsaggregat eines Kraftfahrzeugs fungiert, zum Einsatz kommen, wobei das Brennstoffzellensystem mit der Abgasanlage und/oder den Abgasen der Brennkraftmaschine in wärmeübertragender Verbindung steht. In besonders einfacher Weise können dann die Brennkraftmaschinen-Abgase direkt durch die in den Figuren 7a, 7b erläuterte rohrförmige Begrenzungswand 9 geführt sein.

Figürlich nicht dargestellt ist eine vor der Beschreibung der Ausführungsbeispiele erläuterte vorteilhafte Weiterbildung, wonach an den insbesondere dem Luft-Sauerstoff-Gasstrom L zugewandten Deckelementen 4 (und/oder Trägerelementen 3) der Kathoden-Elektrolyt-Anoden-Einheiten 2 Maßnahmen zur Steigerung der elektrischen Leitfähigkeit vorgesehen sind, bspw. indem auf diesen Elementen eine geeignete gut stromleitende Schicht aufgebracht ist. Hierdurch kann der elektrische Widerstand im Brennstoffzellen-System, der aufgrund der hohen Standfestigkeitsanforderungen an das Material dieser Elemente ungünstigerweise einen hohen Wert annehmen kann, bestmöglich herabgesetzt werden. Selbstverständlich können eine Vielzahl von weiteren Details abweichend von obigen Ausführungen gestaltet sein, ohne den Inhalt der Patentansprüche zu verlassen. Beispielsweise ist dann, wenn im Falle einer anderen baulichen Ausführung bzw. Anordnung von Einzel-Brennstoffzellen 1, 1', bei der diese zwar weiterhin eine gemeinsamen Fläche, jedoch jede für sich keine geschlossene Zylinderfläche bilden, bei Betrachtung der Figuren 1 und 3 in Richtung senkrecht zur Zeichenebene an den vorderen und hinteren Rändern der jeweiligen Brennstoff-Einzelzellen 1, 1' usw. ein geeigneter gasdichter Abschluss erforderlich. Auch können im Falle einer Anordnung der Brennstoff-Einzelzellen auf einem Zylinder oder Kegel (wie in den Figuren 2, 6 dargestellt) mehrere derartige konzentrisch zueinander angeordnete rotationssymmetrische Hohlkörper vorgesehen sein.

## Patentansprüche

1. Brennstoffzellen-System mit mehreren elektrisch in Reihe geschalteten Brennstoff-Einzelzellen (1, 1', 1", ...), die jeweils eine zwischen einem elektrisch leitenden Trägerelement (3, 3', 3", ...) und einem elektrisch leitenden Deckelement (4, 4', 4", ...) angeordnete Kathoden-Elektrolyt-Anoden-Einheit (2, 2', ...) aufweisen, deren dem Trägerelement (3, 3', 3", ...) zugewandte Seite mit einem ersten Gas (G) und deren dem Deckelement (4, 4', 4", ...) zugewandte Seite mit einem zweiten Gas (L) beaufschlagt wird, wobei die elektrisch in Reihe geschalteten Einzelzellen (1, 1', 1", ...) im wesentlichen nebeneinander angeordnet sind, so dass sich deren voneinander beabstandete Kathoden-Elektrolyt-Anoden-Einheiten (2, 2', ...) in einer senkrechten Projektion (P) auf dieselben im wesentlichen nicht überdecken, und wobei bei Betrachtung zweier direkt benachbarter Einzelzellen (1, 1') das Deckelement (4) der ersten Einzelzelle (1) mit dem Trägerelement (3') der zweiten Einzelzelle (1') elektrisch leitend verbunden ist, **dadurch gekennzeichnet, dass** die Flächen der Kathoden-Elektrolyt-Anoden-Einheiten (2, 2', ...) aufeinander folgender Einzelzellen (1, 1', ...) in Strömungsrichtung insbesondere des Brenn-Gasstromes (G) betrachtet zunehmen.

2. Brennstoffzellen-System nach Anspruch 1,
**dadurch gekennzeichnet, dass** die Kathoden-Elektrolyt-Anoden-Einheit (2) flächig partiell auf das Trägerelement (3) aufgebracht ist.

3. Brennstoffzellen-System nach Anspruch 1 oder 2,
**dadurch gekennzeichnet, dass** die mechanische Verbindung zwischen zwei einander benachbarten Trägerelement-Deckelement-Einheiten (3'+4, 3+4") und/oder zwischen einer Trägerelement-Deckelement-Einheit (3'+4) und einer gasführenden Begrenzungswand (7, 9) in Form einer Bördelung ausgebildet ist.

4. Brennstoffzellen-System nach einem der vorangegangenen Ansprüche,
**dadurch gekennzeichnet, dass** die mechanische Verbindung zwischen zwei einander benachbarten Trägerelement-Deckelement-Einheiten (3'+4, 3+4") und/oder zwischen einer Trägerelement-Deckelement-Einheit (3'+4) und einer gasführenden Begrenzungswand (7, 9) in Form einer teilweisen Überlappung mit Sicherung durch ein Spannband (10a) oder dgl., ggf. in Zusammenwirken mit einem Stützelement (10b), ausgeführt ist.

5. Brennstoffzellen-System nach einem der vorangegangenen Ansprüche,
**dadurch gekennzeichnet, dass** an den insbesondere dem Luft-Sauerstoff-Gasstrom (L) zugewandten Deckelementen (oder Trägerelementen) der Kathoden-Elektolyt-Anoden-Einheiten Maßnahmen zur Steigerung der elektrischen Leitfähigkeit vorgesehen sind.

6. Brennkraftmaschine, insbesondere als Antriebsaggregat eines Kraftfahrzeugs, mit einem Brennstoffzellen-System nach einem der vorangegangenen Ansprüche,
**dadurch gekennzeichnet, dass** das Brennstoffzellensystem mit der Abgasanlage und/oder den Abgasen der Brennkraftmaschine in wärmeübertragender Verbindung steht.

## Claims

1. A fuel cell system with a plurality of individual fuel cells (1, 1', 1", ...), connected electrically in series, which each have a cathode-electrolyte-anode unit (2, 2', ...) arranged between an electrically conductive carrier element (3, 3', 3", ...) and an electrically conductive cover element (4, 4', 4", ...), the side of which facing the carrier element (3, 3', 3", ...) is acted upon by a first gas (G) and the side of which facing the cover element (4, 4', 4", ...) is acted upon by a second gas (L), the individual cells (1, 1', 1", ...) electrically connected in series substantially being arranged next to one another so the cathode-electrolyte-anode units (2, 2', ...) thereof, which are spaced apart from one another in a vertical projection (P) thereon, substantially do not overlap, and on observation of two directly adjacent individual cells (1, 1'), the cover element (4) of the first individual cell (1) is electrically conductively connected to the carrier element (3') of the second individual cell (1'), **characterised in that** the surface areas of the cathode-electrolyte-anode units (2, 2', ...) of successive individual cells (1, 1', ...) increase, observed in the flow direction, more especially, of the combustible gas flow (G).

2. A fuel cell system according to claim 1, **characterised in that** the cathode-electrolyte-anode unit (2) is applied partially to the surface of the carrier element (3).

3. A fuel cell system according to claim 1 or 2, **characterised in that** the mechanical connection between two adjacent carrier element-cover element units (3' + 4, 3 + 4") and/or between a carrier element-cover element unit (3' + 4) and a gas-carrying limiting wall (7, 9) is configured in the form of a flanged edge.

4. A fuel cell system according to any one of the preceding claims, **characterised in that** the mechanical connection between two adjacent carrier element-cover element units (3' + 4, 3 + 4") and/or between a carrier element-cover element unit (3' + 4) and a gas-carrying limiting wall (7, 9) is configured in the form of a partial overlap with securing by a tensioning belt (10a) or the like, optionally in cooperation with a support element (10b).

5. A fuel cell system according to any one of the preceding claims, **characterised in that** measures for increasing the electric conductivity are provided on the cover elements (or carrier elements) of the cathode-electrolyte-anode units in particular facing the air-oxygen gas flow (L).

6. An internal combustion engine, more especially as a drive unit of a motor vehicle, comprising a fuel cell system according to any one of the preceding claims, **characterised in that** the fuel cell system has a heat transfer connection to the exhaust system and the exhaust gases of the internal combustion engine.

## Revendications

1. Système de piles à combustible comportant plusieurs piles à combustible distinctes (1, 1', 1", ...) branchées électriquement en série, ces piles ayant chacune une unité cathode-électrolyte-anode (2, 2', ...) prévue entre un élément de support électroconducteur (3, 3', 3", ...) et un élément de couverture électroconducteur (4, 4', 4", ...), l'unité tournée vers l'élément de support (3, 3', 3", ...) est exposée à un premier gaz (G) et le côté tourné vers l'élément de couverture (4, 4', 4", ...) est exposé à un second gaz (L),
les piles séparées (1, 1', 1", ...), branchées électriquement en série, étant pratiquement juxtaposées de façon que les unités cathode-électrolyte-anode (2, 2', ...), écartées les unes des autres, ne se chevauchent pratiquement pas dans une projection verticale (P), et
en considérant deux piles séparées (1, 1', ...), directement voisines, l'élément de couverture (4) de la première pile séparée (1) est relié électriquement à l'élément de support (3') de la seconde pile séparée (1'),
**caractérisé en ce que**
les surfaces des unités cathode-électrolyte-anode (2, 2', ...) de cellules séparées (1, 1', ...) qui se suivent, augmentent dans la direction de l'écoulement, notamment de la veine de gaz combustible (G).

2. Système de piles à combustible selon la revendication 1,
**caractérisé en ce que**
l'unité cathode-électrolyte-anode (2) est appliquée en surface en partie sur l'élément de support (3).

3. Système de piles à combustible selon la revendication 1 ou la revendication 2,
**caractérisé en ce que**
la liaison mécanique entre deux unités élément de support-élément de couverture voisines (3'+4, 3+4") et/ou entre une unité élément de support-élément de couverture (3'+4) et une paroi limite (7, 9) guidant le gaz, est réalisée sous la forme d'un sertissage.

4. Système de piles à combustible selon l'une des revendications précédentes,
**caractérisé en ce que**
la liaison mécanique entre deux unités élément de support-élément de couverture (3'+4, 3+4") voisines et/ou entre une unité élément de support-élément de couverture (3'+4) et une paroi limite (7, 9) de guidage de gaz est réalisée sous le forme d'un chevauchement avec fixation par une bande de serrage (10a) ou un moyen analogue, le cas échéant en coopérant avec un élément d'appui (10b).

5. Système de piles à combustible selon l'une des revendications précédentes,
**caractérisé en ce que**
les éléments de couverture (ou les éléments de support) tournés notamment vers la veine air-oxygène-gaz (L) des unités cathode-électrolyte-anode comportent des moyens pour augmenter la conductivité électrique.

6. Moteur à combustion interne, notamment comme groupe d'entraînement d'un véhicule automobile, comportant un système de piles à combustible selon l'une des revendications précédentes,
**caractérisé en ce que**
le système de piles à combustible est relié à l'installation de gaz d'échappement et/ou au gaz d'échappement du moteur à combustion interne par une liaison d'échange de chaleur.
